# EUROPÄISCHE PATENTANMELDUNG

(11) **EP 2 887 131 A1**
(43) Veröffentlichungstag der Anmeldung: **24.06.2015**
(21) Anmeldenummer: 13199095.4
(22) Anmeldetag: 20.12.2013
(51) Int. Cl.: G02C 13/00, B29C 67/00, B29L 12/00

(54) **Verfahren zur Herstllung einer individuell an eine Person angepassten Brille sowie Brille**

(71) Anmelder: Schmied, Jakob, 4020 Linz (AT)
(72) Erfinder: Schmied, Jakob, 4020 Linz (AT); Schmied, Klaus, 4020 Linz (AT)
(74) Vertreter: Patentanwaltskanzlei Hübscher

(57) **Zusammenfassung**

Die Erfindung betrifft eine passgenaue, individuelle Brille sowie ein Verfahren zur Herstellung einer individuell an eine Person angepassten Brille mit folgenden Verfahrensschritten:
(a) Erzeugen eines dreidimensionalen Brille-Kopf-Bilddatensatzes durch Projektion eines dreidimensionalen Brille-Bilddatensatzes in einen dreidimensionalen Bilddatensatz einer Kopfpartie der Person;
(b) Visuelle Darstellung des Brille-Kopf-Bilddatensatzes;
(c) Erzeugen eines Brillengestell-Druckdatensatzes; und
(d) Herstellen eines Brillengestells durch ein 3D-Druckverfahren unter Verwendung des Brillengestell-Druckdatensatzes.

## Beschreibung

Die Erfindung betrifft ein Verfahren zur Herstellung einer individuell an eine Person angepassten Brille sowie ein Brille.

Aufgabe der Erfindung ist es, ein Verfahren anzubieten, welches innerhalb einer kurzen Zeitdauer die Herstellung einer passgenauen, individuell gefertigten Brille ermöglicht. Ferner ist es Aufgabe eine passgenaue, individuelle Brille anzubieten.

Diese Aufgabe wird durch ein Verfahren mit den Merkmalen des Patentanspruchs 1 bzw. durch eine Brille mit den Merkmalen des Patentanspruchs 13 gelöst. Vorteilhafte Ausführungsformen sind in den Unteransprüchen beschrieben.

Das erfindungsgemäße Verfahren zur Herstellung einer individuell an eine Person angepassten Brille weist folgende Verfahrensschritte auf:
(a) Erzeugen eines dreidimensionalen Brille-Kopf-Bilddatensatzes durch Projektion eines dreidimensionalen Brille-Bilddatensatzes in einen dreidimensionalen Bilddatensatz einer Kopfpartie der Person; (b) Visuelle Darstellung des Brille-Kopf-Bilddatensatzes; (c) Erzeugen eines Brillengestell-Druckdatensatzes; und (d) Herstellen eines Brillengestells durch ein 3D-Druckverfahren unter Verwendung des Brillengestell-Druckdatensatzes.

Bevor die eigentliche individuell angepasste Brille hergestellt wird, wird also zunächst ein virtuelles Abbild der gewünschten Brillenform und einer Kopfpartie der Person erzeugt. Es kann somit bereits in diesem Stadium entschieden werden, ob die anfänglich ausgewählte Brillenform wirklich gefällt. Andernfalls kann das Herstellverfahren abgebrochen werden, ohne bereits kostenträchtige Herstellschritte eingeleitet zu haben. Anschließend erfolgt zumindest die Herstellung des Brillengestells durch ein 3D-Druckverfahren unter Verwendung des Brillengestell-Druckdatensatzes. Durch die Verwendung eines 3D-Druckverfahrens ist das individuelle Brillengestell in einer kurzen Zeitspanne herstellbar. Zum Beispiel wäre es möglich, dass eine Person nach etwa einer Stunde das maßgeschneiderte Brillengestell bzw. die maßgeschneiderte Brille erhält.

In einer vorteilhaften Ausführungsform des Verfahrens wird nach dem Verfahrensschritt (b) eine Akzeptanzabfrage durchgeführt. In der Akzeptanzabfrage wird festgestellt, ob die visuelle Darstellung des Brille-Kopf-Bilddatensatzes akzeptiert wird oder nicht. Falls die visuelle Darstellung akzeptiert wird, wird der Verfahrensschritt (c) ausgeführt. Falls die visuelle Darstellung nicht akzeptiert wird, wird der Verfahrensschritt (a) erneut ausgeführt wird, jedoch mit einem dreidimensionalen Brille-Bilddatensatz, welcher sich von dem dreidimensionalen Brille-Bilddatensatz der vorangegangenen Ausführung des Verfahrensschrittes (a) unterscheidet. Auf diese Weise wird sichergestellt, dass nur dann ein Brillengestell hergestellt wird, wenn der visuelle Eindruck der Brille der Person entspricht. Andernfalls wird ein anderer Brille-Bilddatensatz in die (virtuelle) Kopfpartie der Person projiziert. Dies kann sooft wiederholt werden, bis die Person mit der visuelle Darstellung des Brille-Kopf-Bilddatensatzes einverstanden ist. Ist dies der Fall, d.h. wird die visuelle Darstellung des Brille-Kopf-Bilddatensatzes akzeptiert, wird der Verfahrensschritt (c) ausgeführt und ein Brillengestell-Druckdatensatz erzeugt, der wiederum die Grundlage für das 3D-Druckverfahren zur Herstellung des Brillengestells bildet.

Generell wird zumindest das Brillengestell mit Hilfe eines 3D-Druckverfahrens hergestellt, da das Brillengestell eines der Hauptelemente der Brille darstellt. Neben dem Brillengestell besitzt die herzustellende Brille jedoch auch eine Linse (optische Linse zur Korrektur der Sehstärke, Schutzglaslinse im Fall von Schutzbrillen, Sonnenglaslinse im Fall von Sonnenbrillen).

In einer vorteilhaften Ausführungsform wird in Verfahrensschritt (c) ein Brille-Druckdatensatz erzeugt, welcher neben dem Brillengestell-Druckdatensatz auch einen Linse-Druckdatensatz beinhaltet, und in Verfahrensschritt (d) erfolgt neben der Herstellung des Brillengestells die Herstellung der Linse durch das 3D-Druckverfahren unter Verwendung des Linse-Druckdatensatzes. Es erfolgt somit die Herstellung des Brillengestells und der Linse mit Hilfe eines gemeinsamen 3D-Druckverfahrens. Auf diese Weise kann die komplette Brille in einem einzigen Verfahrensschritt hergestellt werden. Die Zeitspanne zwischen der Auswahl der individuellen Brille und der kompletten Fertigung der Brille ist entsprechend kurz.

In einer anderen vorteilhaften Ausführungsform ist es jedoch auch möglich, zunächst das Brillengestell herzustellen und anschließend in einem weiteren Verfahrensschritt eine Linse in das Brillengestell einzusetzen. Gegebenenfalls kann hierbei die Linse vor dem Einsetzen durch (mechanisches) Bearbeiten an das Brillengestell angepasst werden.

Als besonders vorteilhafte Herstellverfahren für nachträglich in das Brillengestell eingesetzte Linsen haben sich Gießverfahren oder 3D-Druckverfahren herausgestellt.

Die (optischen) Daten für die Linse können entweder über manuelle Refraktion oder Autorefraktion (z.B. durch Autorefraktoren oder ähnliche optische Analysegeräte) ermittelt werden. Es ist auch möglich, einen zur Verfügung stehenden optischen Datensatz (z.B. ermittelte Sehschwäche vom Augenarzt) manuell einzugeben.

In einer weiteren vorteilhaften Ausführungsform wird vor dem Verfahrensschritt (c) eine Abfrage dahingehend durchgeführt, ob ein Prototyp erzeugt werden soll oder nicht. Falls ein Prototyp erzeugt werden soll, werden anschließend folgende Verfahrensschritte ausgeführt:
(aa) Erzeugen eines Prototyp-Druckdatensatzes, welcher auf dem Brille-Bilddatensatzes basiert; (bb) Herstellung eines Brillenprototyps durch ein 3D-Druckverfahren unter Verwendung des Prototyp-Druckdatensatzes; (cc) Verwendung des Prototyp-Druckdatensatzes zur Erzeugung des Brillengestell-Druckdatensatzes in Verfahrensschritt (c). Die Erzeugung eines Prototyps hat den Vorteil, dass dieser typischerweise in der Herstellung günstiger als die eigentliche Brille ist. Der Prototyp kann daher zur weiteren Überprüfung der Passgenauigkeit und der optischen Wirkung (des Aussehens) der gewünschten Brille dienen. Erst abschließend wird die eigentliche Brille hergestellt. Somit handelt es sich bei der letztlich hergestellten Brille um eine besonders passgenaue individuelle Brille, die in optischer Hinsicht den Wünschen der Person mit hoher Wahrscheinlichkeit genügt. Die Erzeugung dieses Prototyps mit Hilfe eines 3D-Druckverfahrens ermöglicht eine schnelle Herstellung des Prototyps, sodass die Person sehr zeitnah ein Einschätzung treffen kann, ob das Aussehen des Prototyps den Wünschen der Person entspricht.

Falls kein Prototyp erzeugt werden soll, wird der Brille-Bilddatensatz zur Erzeugung des Brillengestell-Druckdatensatzes in Verfahrensschritt (c) verwendet, sodass sichergestellt ist, dass das herzustellende Brillengestell mit dem in Verfahrensschritt (b) dargestellten dreidimensionalen Brille-Bilddatensatz übereinstimmt.

In einer weiteren vorteilhaften Ausführungsform wird nach dem Verfahrensschritt (bb) eine Prototyp-Akzeptanzabfrage durchgeführt. In der Prototyp-Akzeptanzabfrage wird festgestellt, ob der Brillenprototyp akzeptiert wird oder nicht. Falls der Brillenprototyp akzeptiert wird, wird der Verfahrensschritt (cc) ausgeführt. Falls der Prototyp nicht akzeptiert wird, werden folgende Verfahrensschritte ausgeführt: (i) Mechanische Bearbeitung des Brillenprototyps; (ii) 3D-Scan des bearbeiteten Brillenprototyps; (iii) Erzeugen eines weiteren Prototyp-Druckdatensatzes, welcher auf 3D-Scan des bearbeiteten Brillenprototyps basiert; und (iv) Erneutes Ausführen des Verfahrensschrittes (bb), wobei der in Verfahrensschritt (iii) erzeugte Prototyp-Druckdatensatz zur Herstellung eines weiteren Brillenprototyps verwendet wird. Auf diese Weise wird sichergestellt, dass nur dann die eigentliche Brille hergestellt wird, wenn der Brillenprototyp hinsichtlich Passform und/oder Aussehen den Wünschen der Person entspricht. Nur wenn die Prototyp-Akzeptanzabfrage positiv beantwortet wird, erfolgt die Vorbereitung zur Herstellung der eigentlichen Brille, d.h. der Verfahrensschritt (d) wird ausgeführt. Andernfalls, d.h. wenn die Prototyp-Akzeptanzabfrage negativ beantwortet wird, erfolgt eine (manuelle) mechanische Nachbearbeitung des Brillenprototyps, bis dieser den Wünschen der Person entspricht. Erst dann wird dieser nachbearbeitete Prototyp einen 3D-Scan unterzogen. Die auf diese Weise erzielten Daten können dann zur Herstellung eines weiteren Brillenprototyps dienen. Dies kann ggf. sooft wiederholt werden, bis die Person mit der Passgenauigkeit und/oder dem Aussehen des Brillenprototyps einverstanden ist.

In einer weiteren vorteilhaften Ausführungsform des Verfahrens wird der Bilddatensatz der Kopfpartie der Person durch einem 3D-Scan einer Kopfpartie der Person erzeugt. Auf diese Weise kann ein besonders realistisches und aktuelles Abbild der Kopfpartie erhalten werden.

In weiteren vorteilhaften Ausführungsformen kann der Brille-Bilddatensatz aus einer Datenbank ausgewählt und/oder durch manuelle Eingabe von Brillenparametern erzeugt werden. In der Datenbank kann beispielsweise eine Vielzahl von Brille-Bilddatensätzen gespeichert sein, die je nach Vorliebe der Person ausgewählt und anschließend dem Verfahrensschritt (a) zugrundegelegt werden. Die manuelle Eingabe von Brillenparametern kann der Erzeugung von individuell zusammengestellten Brillenunikaten dienen. Beispielsweise können Brillenparameter wie Grundmaterial(ien), Applikationen, Besonderheiten, Gravuren, Verglasung, usw. definiert werden und hieraus ein individueller Brille-Bilddatensatz erzeugt werden. Dieser individuelle Brille-Bilddatensatz kann wiederum dem Verfahrensschritt (a) zugrunde gelegt werden.

Als besonders vorteilhaft hat sich die visuelle Darstellung des Brille-Kopf-Bilddatensatzes auf einem Bildschirm, insbesondere auf einem Bildschirm eines mobilen elektronischen Gerätes (z.B. Tablet, Smartphone, Notebook) herausgestellt. Auf diese Weise ist eine unkomplizierte und ortsungebundene Darstellung des virtuellen Abbildes der gewünschten Brille möglich.

Die erfindungsgemäße Brille weist ein Brillengestell und eine Linse auf und ist durch das erfindungsgemäße Verfahren hergestellt. Insbesondere weist die erfindungsgemäße Brille damit ein durch ein 3D-Druckverfahren hergestelltes Brillengestell auf. In einer vorteilhaften Ausführungsform ist zusätzlich die Linse ebenfalls durch ein 3D-Druckverfahren, insbesondere durch dasselbe 3D-Druckverfahren wie das Brillengestell, hergestellt.

Wird vorliegend der Begriff "Brille" verwendet, so ist hierunter sowohl ein Korrekturbrille als auch eine Sonnenbrille und/oder eine Schutzbrille zu verstehen. Außerdem bezieht sich das Verfahren zur Herstellung einer Brille sowohl auf die Herstellung eines Brillengestells bzw. einer Brillenfassung als auch auf die Herstellung einer kompletten Brille (bestehend aus Brillengestell und Gläsern).

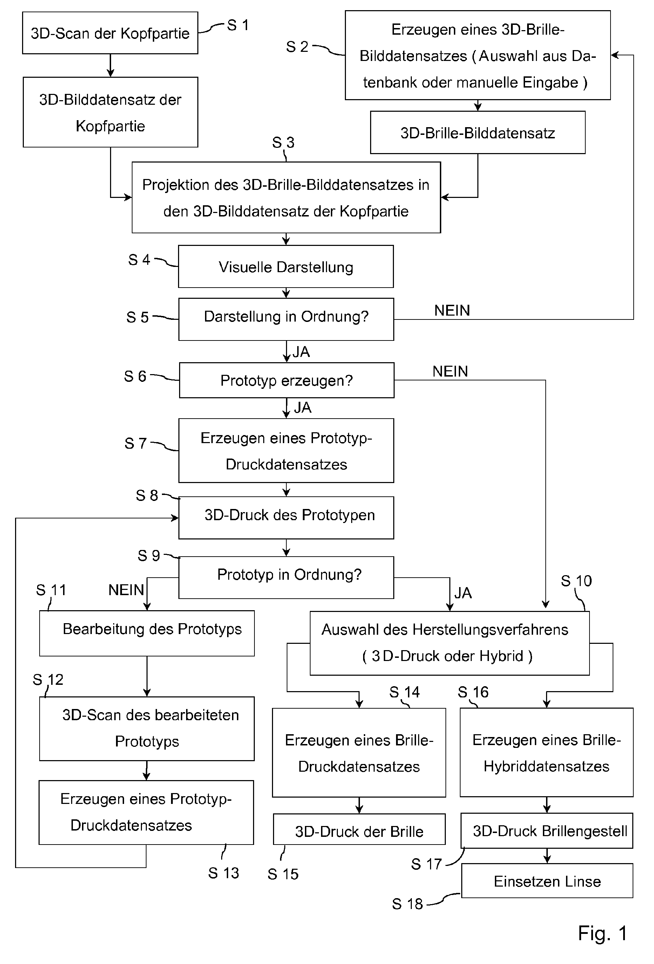

Die Erfindung ist anhand eines Ausführungsbeispiels in der Zeichnungsfigur weiter erläutert. Fig. 1 zeigt ein schematisches Blockschaubild, das den Ablauf einzelner Verfahrensschritte des Verfahrens zeigt.

In Schritt S 1 erfolgt zunächst ein 3D-Scan des Kopfes bzw. einer Kopfpartie der Person, an der die individuell hergestellte Brille angepasst werden soll. Dieser 3D-Scan wird mittels eines an sich bekannten 3D-Scanners durchgeführt. Als Ergebnis diese 3D-Scans liegt zunächst ein dreidimensionaler Bilddatensatz der Kopfpartie vor.

In Schritt S 2 erfolgt die Erzeugung eines dreidimensionalen Brille-Bilddatensatzes. Dies kann insbesondere durch die Auswahl eines Brille-Bilddatensatzes aus einer Datenbank oder durch die manuelle Eingabe von Brillenparametern erfolgen. Ferner kann in einer weiteren Verfahrensvariante auch ein von der Person beigestellter Datensatz (z.B. mit einem Logo oder Schriftzug) eines Datenträgers der Person (z.B. eines externen Speichermediums (z.B. externe Festplatte oder USB-Stick)) zur Ergänzung des Brille-Bilddatensatzes verwendet werden. Als Ergebnis des Schritts S 2 liegt damit ein dreidimensionaler Brille-Bilddatensatz vor.

In Schritt S 3 wird nun ein dreidimensionaler Brille-Kopf-Bilddatensatz durch Projektion des dreidimensionalen Brille-Bilddatensatzes in den dreidimensionalen Bilddatensatz der Kopfpartie erzeugt. Der Schritt S 3 entspricht somit den oben erwähnten Verfahrensschritt (a).

In Schritt S 4 erfolgt eine visuelle Darstellung des Brille-Kopf-Bilddatensatzes. Diese visuelle Darstellung erfolgt auf einem Bildschirm eines elektronischen Gerätes. Insbesondere können der Blickwinkel, die Beleuchtungseinstellungen, die Farbwiedergabe und/oder der Vergrößerungsgrad der visuellen Darstellung durch eine entsprechende Bedienung des elektronischen Gerätes verändert werden. Der Schritt S 4 entspricht somit den oben erwähnten Verfahrensschritt (b).

In Schritt S 5 erfolgt eine Akzeptanzabfrage dahingehend, ob die visuelle Darstellung des Brille-Kopf-Bilddatensatzes akzeptiert wird oder nicht. Wird die visuelle Darstellung akzeptiert, d.h. ist die Person mit dem Aussehen zufrieden, so wird das Verfahren mit dem Schritt S 6 fortgesetzt. Wird die visuelle Darstellung nicht akzeptiert, d.h. ist die Person mit dem Aussehen nicht zufrieden, so wird das Verfahren mit dem Schritt S 2 fortgesetzt. D.h. es wird ein weiterer dreidimensionaler Brille-Bilddatensatz erzeugt (entweder durch Auswahl eines anderen Datensatzes aus der Datenbank oder durch manuelle Eingabe alternativer Brillenparameter).

In Schritt S 6 erfolgt eine Abfrage dahingehend, ob ein Prototyp erzeugt werden soll. Soll ein Prototyp erzeugt werden, d.h. die Abfrage wird mit JA beantwortet, so wird das Verfahren mit dem Schritt S 7 fortgesetzt. Soll kein Prototyp erzeugt werden, d.h. die Abfrage wird mit NEIN beantwortet, so wird das Verfahren mit dem Schritt S 10 fortgesetzt.

In Schritt S 7 wird aus dem Brille-Bilddatensatz derjenigen Brille, die in Schritt S 5 visuell dargestellt wird, ein Prototyp-Druckdatensatzes erzeugt (d.h. der Brille-Bilddatensatz wird derart aufbereitet, dass die Daten als Grundlage für das folgende 3D-Druckverfahren dienen können). Dieser Prototyp-Druckdatensatz wiederum dient in Schritt S 8 als Basis für die Herstellung eines Brillenprototyps durch ein 3D-Druckverfahren. Hierbei können an sich bekannte 3D-Druckverfahren eingesetzt werden. Der Schritt S 7 entspricht somit den oben erwähnten Verfahrensschritt (aa) und der Schritt S 8 entspricht dem oben erwähnten Verfahrensschritt (bb).

In Schritt S 9 erfolgt eine Prototyp-Akzeptanzabfrage dahingehend, ob der in Schritt S 8 hergestellt Brillenprototyp akzeptiert wird oder nicht. Wird der Brillenprototyp akzeptiert, d.h. ist die Person mit der Passform und dem Aussehen des Prototyps zufrieden, wird das Verfahren mit dem Schritt S 10 fortgesetzt. Wird der Brillenprototyp nicht akzeptiert, d.h. ist die Person mit der Passform und/der dem Aussehen des Prototyps nicht zufrieden, so wird das Verfahren mit dem Schritt S 11 fortgesetzt.

In Schritt S 11 erfolgt eine manuelle Nachbearbeitung des Brillenprototyps, bis dieser den Wünschen der Person entspricht. Anschließend wird der auf diese Weise nachbearbeitete Prototyp in Schritt S 12 einen 3D-Scan unterzogen. Dieser 3D-Scan kann in ähnlicher Weise wie der 3D-Scan der Kopfpartie (vgl. Beschreibung zu Schritt S 1) erfolgen. Die durch den 3D-Scan des bearbeiteten Prototyps generierten Daten dienen als Grundlage für die Erzeugung eines weiteren Prototyp-Druckdatensatzes in Schritt S 13. Der Schritt S 11 entspricht somit den oben erwähnten Verfahrensschritt (i), der Schritt S 12 entspricht dem oben erwähnten Verfahrensschritt (ii) und der Schritt S 13 entspricht dem oben erwähnten Verfahrensschritt (iii).

Nachdem in Schritt S 13 ein weiterer Prototyp-Druckdatensatze erzeugt wurde, wird der Schritt S 8 nochmals ausgeführt, d.h. es wird ein weiterer Brillenprototyp erzeugt. Dieser weitere Brillenprototyp wird abermals der Prototyp-Akzeptanzabfrage unterzogen (vgl. Beschreibung zu Schritt S 9).

In Schritt S 10 erfolgt eine Abfrage des gewünschten Herstellverfahrens für die individuell angepasste Brille. Es kann zwischen der Herstellung der kompletten Brille in einem gemeinsamen 3D-Druckverfahren (Option: 3 D-Druck) und der Herstellung des Brillengestells durch 3D-Druck getrennt von der Linse (Option: Hybrid) gewählt werden. Je nach Auswahl wird das Verfahren mit Schritt S 14 oder mit Schritt S 16 fortgesetzt.

Wird in Schritt S 10 die Herstellung der kompletten Brille in 3D-Druck ausgewählt (Option: 3 D-Druck), so erfolgt in Schritt S 14 die Erzeugung eines Brille-Druckdatensatzes. Dieser Brille-Druckdatensatz beinhaltet neben einem Brillengestell-Druckdatensatz auch einen Linse-Druckdatensatz, d.h. der Brille-Druckdatensatz enthält sämtliche Informationen/Daten (z.B. Geometrie-, Werkstoff- und Verfahrensparameter), die für den folgenden 3D-Druck der kompletten Brille nötig sind. Mit anderen Worten entspricht der erzeugte Brille-Druckdatensatz je nachdem, ob ein Prototyp erzeugt wurde oder nicht, entweder dem Brille-Bilddatensatz (bei keiner Prototyperzeugung) oder dem Prototyp-Druckdatensatz aus Verfahrensschritt (cc) (bei Prototyperzeugung), wobei der jeweilige Datensatz derart aufbereitet wird, dass die Daten als Grundlage für das folgende 3D-Druckverfahren der kompletten Brille dienen können. Die (optischen) Daten für die Linse werden hierbei entweder über eine manuelle Refraktion oder eine Autorefraktion (z.B. durch Autorefraktoren oder ähnliche optische Analysegeräte) ermittelt. Es ist auch möglich, einen zur Verfügung stehenden optischen Datensatz (z.B. ermittelte Sehschwäche vom Augenarzt) manuell einzugeben. In Schritt S 15 erfolgt anschließend die Herstellung der kompletten Brille (Brillengestell und Linse) durch ein gemeinsames 3D-Druckverfahren.

Wird in Schritt S 10 die Herstellung der Brille durch ein Hybrid-Verfahren ausgewählt (Option: Hybrid), so erfolgt in Schritt S 16 die Erzeugung eines Brille-Hybriddatensatzes. Dieser Brille-Hybriddatensatz enthält einen Brillengestell-Druckdatensatz, d.h. sämtliche Informationen/Daten (z.B. Geometrie-, Werkstoff- und Verfahrensparameter), die für den folgenden 3D-Druck des Brillengestells nötig sind. Mit anderen Worten entspricht der erzeugte Brillengestell-Druckdatensatz je nachdem, ob ein Prototyp erzeugt wurde oder nicht, entweder einer Teilmenge des Brille-Bilddatensatz (bei keiner Prototyperzeugung) oder einer Teilmenge des Prototyp-Druckdatensatz aus Verfahrensschritt (cc) (bei Prototyperzeugung), wobei der jeweilige Datensatz derart aufbereitet wird, dass die Daten als Grundlage für das folgende 3D-Druckverfahren des Brillengestells dienen können Daneben enthält der Brille-Hybriddatensatz Informationen über die zu verwendende Linse (Linseninformationen). Diese Linseninformationen können Informationen sein, die die Herstellung der Linse ermöglichen (z.B. Parameter eines Gießverfahrens zur Herstellung der Linse oder Parameter eines 3D-Druckverfahrens zur Herstellung der Linse) oder Informationen, die die Art und die Eigenschaften, der zu verwendenden Linse beschreiben. Die optischen Daten (optische Eigenschaften) der Linse werden hierbei entweder über eine manuelle Refraktion oder eine Autorefraktion (z.B. durch Autorefraktoren oder ähnliche optische Analysegeräte) ermittelt. Es ist auch möglich, einen zur Verfügung stehenden optischen Datensatz (z.B. ermittelte Sehschwäche vom Augenarzt) manuell einzugeben.

In Schritt S 17 erfolgt die Herstellung des Brillengestells durch ein 3D-Druckverfahren auf Basis des Brillengestell-Druckdatensatzes. Hierbei können an sich bekannte 3D-Druckverfahren eingesetzt werden.

In Schritt S 18 erfolgt ein Einsetzen der Linse in das in Schritt S 17 hergestellte Brillengestell. Gegebenenfalls kann vor dem Einsetzen der Linse eine Anpassung der Linse an das Brillengestell (z.B. durch mechanische Bearbeitung) erfolgen. Die in Schritt S 18 eingesetzte Linse kann durch ein Gießverfahren oder ein 3D-Druckverfahren hergestellt werden. Es ist jedoch auch möglich vorgefertigte, konventionelle Linsen zu verwenden.

Nach Abschluss des Schrittes S 15 bzw. S 18 liegt somit eine individuell angepasste Brille vor, die innerhalb einer kurzen Zeitspanne hergestellt wurde. Die Brille besteht aus einem Brillengestell und zwei Linsen (für jedes Auge eine Linse). Je nach Verfahrensvariante wird entweder nur das Brillengestell durch ein 3D-Druckverfahren hergestellt oder auch jeweilige Linse. Durch die vorangestellte Herstellung eines Prototyps wird nur dann eine Brille hergestellt, wenn die Person mit hoher Wahrscheinlichkeit mit der Passform und dem Aussehen der Brille zufrieden ist. Die Herstellung von fehlerhaften bzw. ungewünschten Brillen wird auf diese Weise verhindert. Ferner erfolgt vor der Herstellung des Brillengestells eine visuelle Darstellung des Brille-Kopf-Bilddatensatzes. Die Herstellung des Brillengestells erfolgt nur, wenn die Person mit der visuellen Darstellung zufrieden ist. Auf diese Weise kann bereits in einem sehr frühem Stadium des Herstellverfahrens auf die Bedürfnisse der Person eingegangen werden und die Herstellung von Brillen, die nicht den Wünschen der Person entsprechen, vermieden werden.

## Patentansprüche

1. Verfahren zur Herstellung einer individuell an eine Person angepassten Brille mit folgenden Verfahrensschritten:
(a) Erzeugen eines dreidimensionalen Brille-Kopf-Bilddatensatzes durch Projektion eines dreidimensionalen Brille-Bilddatensatzes in einen dreidimensionalen Bilddatensatz einer Kopfpartie der Person;
(b) Visuelle Darstellung des Brille-Kopf-Bilddatensatzes;
(c) Erzeugen eines Brillengestell-Druckdatensatzes; und
(d) Herstellen eines Brillengestells durch ein 3D-Druckverfahren unter Verwendung des Brillengestell-Druckdatensatzes.

2. Verfahren nach Anspruch 1, wobei nach dem Verfahrensschritt (b) eine Akzeptanzabfrage durchgeführt wird, in welcher festgestellt wird, ob die visuelle Darstellung des Brille-Kopf-Bilddatensatzes akzeptiert wird oder nicht, und wobei,
falls die visuelle Darstellung akzeptiert wird, der Verfahrensschritt (c) ausgeführt wird, und,
falls die visuelle Darstellung nicht akzeptiert wird, der Verfahrensschritt (a) erneut ausgeführt wird, jedoch mit einem dreidimensionalen Brille-Bilddatensatz, welcher sich von dem dreidimensionalen Brille-Bilddatensatz der vorangegangenen Ausführung des Verfahrensschrittes (a) unterscheidet.

3. Verfahren nach einem der vorhergehenden Ansprüche, wobei in Verfahrensschritt (c) ein Brille-Druckdatensatz erzeugt wird, welcher neben dem Brillengestell-Druckdatensatz auch einen Linse-Druckdatensatz beinhaltet, und
wobei in Verfahrensschritt (d) neben der Herstellung des Brillengestells die Herstellung der Linse durch das 3D-Druckverfahren unter Verwendung des Linse-Druckdatensatzes erfolgt.

4. Verfahren nach einem der vorhergehenden Ansprüche, wobei in einem weiteren Verfahrensschritt (e) ein Einsetzen einer Linse in das im Verfahrensschritt (d) hergestellte Brillengestell erfolgt.

5. Verfahren nach Anspruch 4, wobei die Linse vor dem Einsetzen durch Bearbeiten an das Brillengestell angepasst wird.

6. Verfahren nach einem der Ansprüche 4 oder 5, wobei die Linse durch ein Gießverfahren oder ein 3D-Druckverfahren hergestellt wird.

7. Verfahren nach einem der vorhergehenden Ansprüche, wobei vor dem Verfahrensschritt (c) eine Abfrage durchgeführt wird, in welcher festgestellt wird, ob ein Prototyp erzeugt werden soll oder nicht, und wobei,
falls ein Prototyp erzeugt werden soll, folgende Verfahrensschritte ausgeführt werden:
(aa) Erzeugen eines Prototyp-Druckdatensatzes, welcher auf dem Brille-Bilddatensatzes basiert;
(bb) Herstellung eines Brillenprototyps durch ein 3D-Druckverfahren unter Verwendung des Prototyp-Druckdatensatzes;
(cc) Verwendung des Prototyp-Druckdatensatzes zur Erzeugung des Brillengestell-Druckdatensatzes in Verfahrensschritt (c);
und, wobei,
falls ein Prototyp nicht erzeugt werden soll, der Brille-Bilddatensatz zur Erzeugung des Brillengestell-Druckdatensatzes in Verfahrensschritt (c) verwendet wird.

8. Verfahren nach Anspruch 7, wobei nach dem Verfahrensschritt (bb) eine Prototyp-Akzeptanzabfrage durchgeführt wird, in welcher festgestellt wird, ob der Brillenprototyp akzeptiert wird oder nicht, und wobei,
falls der Brillenprototyp akzeptiert wird, der Verfahrensschritt (cc) ausgeführt wird, und,
falls der Prototyp nicht akzeptiert wird, folgende Verfahrensschritte ausgeführt werden:
(i) Mechanische Bearbeitung des Brillenprototyps;
(ii) 3D-Scan des bearbeiteten Brillenprototyps;
(iii) Erzeugen eines weiteren Prototyp-Druckdatensatzes, welcher auf 3D-Scan des bearbeiteten Brillenprototyps basiert;
(iv) Erneutes Ausführen des Verfahrensschrittes (bb), wobei der in Verfahrensschritt (iii) erzeugte Prototyp-Druckdatensatz zur Herstellung eines weiteren Brillenprototyps verwendet wird.

9. Verfahren nach einem der vorhergehenden Ansprüche, wobei der Bilddatensatz der Kopfpartie der Person durch einem 3D-Scan einer Kopfpartie der Person erzeugt wird.

10. Verfahren nach einem der vorhergehenden Ansprüche, wobei der Brille-Bilddatensatz aus einer Datenbank ausgewählt wird.

11. Verfahren nach einem der Ansprüche 1 bis 9, wobei der Brille-Bilddatensatz durch manuelle Eingabe von Brillenparametern erzeugt wird.

12. Verfahren nach einem der vorhergehenden Ansprüche, wobei die visuelle Darstellung des Brille-Kopf-Bilddatensatzes auf einem Bildschirm, insbesondere auf einem Bildschirm eines mobilen elektronischen Gerätes, erfolgt.

13. Brille, aufweisend:
- ein Brillengestell; und
- eine Linse;
wobei die Brille durch das Verfahren gemäß einem der vorhergehenden Ansprüche hergestellt ist.

14. Brille nach Anspruch 13, wobei die Linse eine durch ein 3D-Druckverfahren hergestellte Linse ist.
